# EUROPÄISCHE PATENTSCHRIFT

(11) **EP 0 710 968 B1**
(45) Veröffentlichungstag und Bekanntmachung des Hinweises auf die Patenterteilung: **10.09.1997**
(21) Anmeldenummer: 95117275.8
(22) Anmeldetag: 02.11.1995
(51) Int. Cl.: H01G 2/04, H05K 7/12

(54) **Elektrischer Kondensator, insbesondere Elektrolytkondensator**
Electric capacitor, especially electrolytic capacitor
Condensateur électrique, en particulier condensateur électrolytique

(30) Priorität: 03.11.1994 DE 4439272
(43) Veröffentlichungstag der Anmeldung: 08.05.1996
(73) Patentinhaber: SIEMENS MATSUSHITA COMPONENTS GmbH & CO KG, 81617 München (DE)
(72) Erfinder: Michel, Hartmut, Dr. rer. nat., D-89520 Heidenheim (DE); Hebel, Rainer, Dipl.-Ing., D-89518 Heidenheim (DE); Kocher, Hans-Peter, D-89564 Nattheim (DE)
(74) Vertreter: Fuchs, Franz-Josef, Dr.-Ing.

(56) Entgegenhaltungen:
- EP-A- 0 452 641
- DE-A- 3 807 626

## Beschreibung

Die Erfindung betrifft einen elektrischen Kondensator, insbesondere Elektrolytkondensator, der in ein, insbesondere metallisches, Gehäuse eingebaut ist, das am Boden einen Befestigungszapfen besitzt mit dessen Hilfe der Kondensator an einer Befestigungsplatte schüttelfest fixiert ist.

Derartige Kondensatoren sind bekannt und beispielsweise im Siemens Matsushita Components Datenbuch "Aluminium-Elektrolytkondensatoren", Ausgabe 1994, Seiten 122 bis 128, beschrieben.Dort besitzt der Befestigungszapfen ein Gewinde, so daß der Kondensator mittels einer Kunststoffmutter mit der Befestigungsplatte verschraubt werden kann. Da die Befestigungsplatte wegen der erforderlichen Wärmeableitung meistens aus Metall besteht und bei Elektrolytkondensatoren im allgemeinen die Kathode mit dem Metallgehäuse verbunden ist, muß für die erforderliche Isolierung zwischen Kondensator und Befestigungsplatte gesorgt werden. Dies geschieht bei isolierten Kondensatoren mit gelochter Isolierscheibe und Isolierhülle bzw. bei nicht isolierten Kondensatoren mit einer (gelochten) Isolierfolie zwischen Kondensator und Befestigungsplatte. Die Montage der Kondensatoren auf der Befestigungsplatte setzt somit ein beidseitiges Arbeiten voraus, da der Kondensator auf der einen Seite der Befestigungsplatte festgehalten werden muß, während die Verschraubung von der anderen Seite der Befestigungsplatte vorgenommen wird. Ein weiteres Erschwernis ist bei dieser Montageart, daß bestimmte maximale Anzugsdrehmomente bei der Montage nicht überschritten werden dürfen.

Aufgabe der vorliegenden Erfindung ist es, den Kondensator der eingangs genannten Art derart weiterzubilden, daß die Montage der Kondensatoren auf der Befestigungsplatte in einfacher Weise erfolgen kann, wobei auch nicht isolierte Kondensatoren an metallischen Befestigungsplatten befestigt werden können.

Diese Aufgabe wird erfindungsgemäß dadurch gelöst, daß der Befestigungszapfen durch eine Schnapp-Halterung aus einem isolierenden Material fixiert ist, die in einer Bohrung der Befestigungsplatte eingedrückt ist, daß an der Schnapp-Halterung eine Ausformung angeordnet ist, die die Schnapp-Halterung an die Befestigungsplatte preßt, und daß der Befestigungszapfen eine Einschnürung aufweist in welche an der Schnapp-Halterung angeordnete Teile eingreifen.

Vorteilhafte Ausgestaltungen des Gegenstandes der Erfindung sind in den Unteransprüchen angeführt.

Die Erfindung wird im folgenden anhand von Ausführungsbeispielen erläutert.

In der dazugehörenden Zeichnung zeigen:
Fig.1 einen Elektrolytkondensator, der mit einer Schnapp-Halterung an einer Befestigungsplatte fixiert ist und
Fig.2 eine Ansicht der Schnapp-Halterung nach Fig.1.

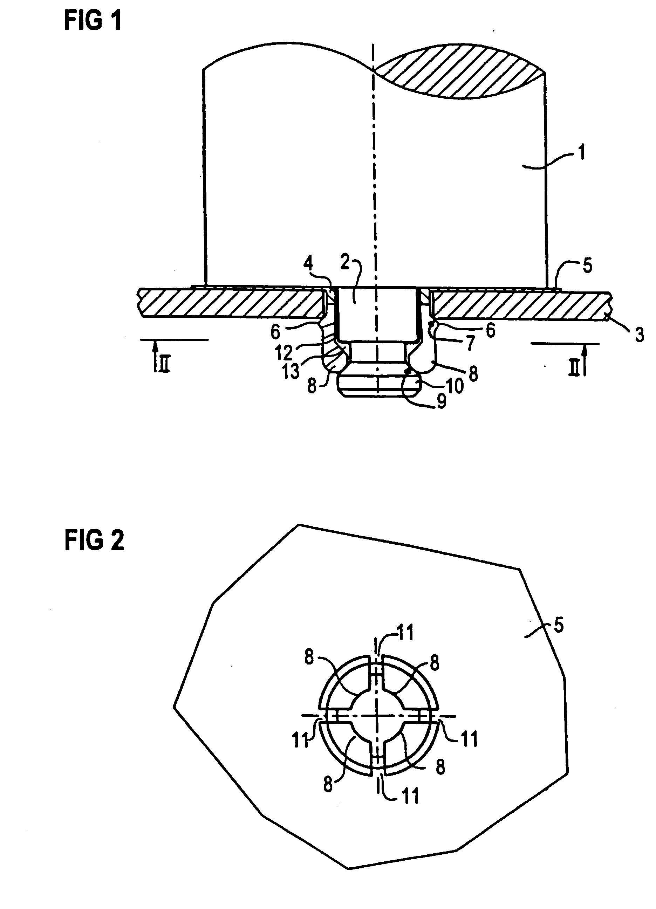

In der Fig.1 ist das Gehäuse 1 dargestellt, in das ein Elektrolytkondensator eingebaut ist. am Boden des Gehäuses 1 ist ein Befestigungszapfen 2 angeordnet, der eine Einschnürung 13 aufweist. Das Gehäuse 1 ist an einer metallischen Befestigungsplatte 3 befestigt, wobei der Befestigungszapfen 2 durch ein in der Befestigungsplatte 3 angeordnetes Loch 4 geführt ist.

Durch das Loch 4 ist vor der Montage des Gehäuses 1 eine Schnapp-Halterung 5 gesteckt, die Ausformungen 6 mit abgeschrägten Flächen 7 besitzt. Durch diese abgeschrägten Flächen 7 wird die Schnapp-Halterung 5 nach dem Eindrücken in die Befestigungsplatte 3 an die Befestigungsplatte 3 gepreßt, so daß eine gute Fixierung der Schnapp-Halterung 5 an der Befestigungsplatte 3 erreicht wird.

Nach Fixierung der Schnapp-Halterung 5 wird das Gehäuse 1 mit dem Befestigungszapfen 2 in diese Anordnung eingedrückt. Dabei rasten die an der Schnapp-Halterung 5 angeordneten Teile 8 in die am Befestigungszapfen 2 angebrachte Einschnürung 13 ein. Durch die im Abschnitt 10 im Anschluß an die Einschnürung 3 angebrachten abgeschrägten Flächen 9 wird das Gehäuse 1 gegen die Schnapp-Halterung 5 und damit auch gegen die Befestigungsplatte 3 gezogen. Dadurch läßt sich eine sichere, schüttelfeste Verbindung zwischen Gehäuse 1 und Befestigungsplatte 3 erreichen.

Durch die abgeschrägten Flächen 6 und 9 an der Schpapp-Halterung 5 bzw. am Befestigungszapfen 2 können auch Maßabweichungen ausgeglichen werden, d.h. es ist auch für einen unter Umständen erforderlichen Toleranzausgleich gesorgt.

Da durch die in der Fig.2 sichtbaren Schlitze 11 in der Schnapp-Halterung 5 die Luftstrecke zwischen Befestigungszapfen 2 und Befestigungsplatte 3 verringert wird, kann entweder am Befestigungszapfen 2 eine Isolierung 12 (z.B. ein Schrumpfschlauch o.dgl.) angeordnet werden, oder es kann zwischen Befestigungsplatte 3 und Schnapp-Halterung 5 eine, in der Zeichnung nicht dargestellte zusätzliche Isolierkappe vorhanden sein.

Der Vorteil der Schnapp-Halterung 5 besteht in der schnelleren Montage des Gehäuses 1, das nur in die Befestigungsplatte 3 eingedrückt und nicht verschraubt werden muß. Weiterhin erfolgt die Montage des Gehäuses 1 im Gegensatz zum Stand der Technik nur von einer Seite der Befestigungsplatte 3, wodurch eine zusätzliche Erleichterung erreicht wird. Zusätzlich ist anzuführen, daß für die Isolierung nur noch ein Teil erforderlich ist, da gelochte Isolierscheiben bzw. -folien nicht mehr benötigt werden.

## Patentansprüche

1. Elektrischer Kondensator, insbesondere Elektrolytkondensator, der in ein, insbesondere metallisches, Gehäuse (1) eingebaut ist, das am Boden einen Befestigungszapfen (2) besitzt mit dessen Hilfe der Kondensator an einer Befestigungsplatte (3) schüttelfest fixiert ist,
**dadurch gekennzeichnet,**
daß der Befestigungszapfen (2) durch eine Schnapp-Halterung (5) aus einem isolierenden Material fixiert ist, die in einer Bohrung (4) der Befestigungsplatte (3) eingedrückt ist, daß an der Schnapp-Halterung (5) eine Ausformung (6) angeordnet ist, die die Schnapp-Halterung (5) an die Befestigungsplatte (3) preßt, und daß der Befestigungszapfen (2) eine Einschnürung (13) aufweist in welche an der Schnapp-Halterung (5) angeordnete Teile (8) eingreifen.

2. Elektrischer Kondensator nach Anspruch 1,
**dadurch gekennzeichnet,**
daß die Schnapp-Halterung (5) vierfach geschlitzt (11) ist.

3. Elektrischer Kondensator nach Anspruch 1 oder 2,
**dadurch gekennzeichnet,**
daß der an die Einschnürung (13) angrenzende Abschnitt (10) des Befestigungszapfens (2) eine abgeschrägte Fläche (9) besitzt.

4. Elektrischer Kondensator nach einem der Ansprüche 1 bis 3,
**dadurch gekennzeichnet,**
daß die an der Schnapp-Halterung (5) angeordnete Ausformung (6) eine abgeschrägte Fläche (7) besitzt.

5. Elektrischer Kondensator nach einem der Ansprüche 1 bis 4,
**dadurch gekennzeichnet,**
daß der Befestigungszapfen (2) mit einer Isolierung (12) versehen ist.

6. Elektrischer Kondensator nach Anspruch 5,
**dadurch gekennzeichnet,**
daß die Isolierung (12) aus einem Schrumpfschlauch oder einer Isolierkappe besteht.

## Claims

1. Electric capacitor, in particular an electrolytic capacitor, which is installed in a container (1), in particular a metallic one, which has at the bottom a fastening pin (2) with the aid of which the capacitor is fixed in a vibration-resistant fashion to a fastening plate (3), characterized in that the fastening pin (2) is fixed by a snap-action holder (5) which is made from an insulating material and is pressed into a bore (4) of the fastening plate (3), in that there is arranged on the snap-action holder (5) a projection (6) which presses the snap-action holder (5) against the fastening plate (3), and in that the fastening pin (2) has a constriction (13) in which parts (8) arranged on the snap-action holder (5) engage.

2. Electric capacitor according to Claim 1, characterized in that the snap-action holder (5) has four slots (11).

3. Electric capacitor according to Claim 1 or 2, characterized in that the section (10), adjacent to the constriction (13), of the fastening pin (2) has a bevelled surface (9).

4. Electric capacitor according to one of Claims 1 to 3, characterized in that the projection (6) arranged on the snap-action holder (5) has a bevelled surface (7).

5. Electric capacitor according to one of Claims 1 to 4, characterized in that the fastening pin (2) is provided with insulation (12).

6. Electric capacitor according to Claim 5, characterized in that the insulation (12) comprises a shrink-on sleeve or an insulating cap.

## Revendications

1. Condensateur électrique, en particulier condensateur électrolytique, qui est monté dans un boîtier (1), notamment métallique, possédant au fond un tourillon de fixation (2) à l'aide duquel le condensateur est fixé, en résistant aux secousses, à une plaque de fixation (3), caractérisé en ce que le tourillon de fixation (2) est fixé par une fixation encliquetable (5) en matière isolante, qui est enfoncée dans un alésage (4) de la plaque de fixation (3), en ce qu'une déformation (6) est ménagée sur la fixation encliquetable (5), qui presse la fixation encliquetable (5) contre la plaque de fixation (3), et en ce que le tourillon de fixation (2) présente un rétrécissement (13) dans lequel engrènent des pièces (8) disposées sur la fixation encliquetable.

2. Condensateur électrique selon la revendication 1, caractérisé en ce que la fixation encliquetable (5) est fendue en quatre (11).

3. Condensateur électrique selon la revendication 1 ou 2, caractérisé en ce que la section (10) limitant le rétrécissement (13) possède une surface biseautée (9).

4. Condensateur électrique selon l'une des revendications 1 à 3, caractérisé en ce que la déformation (6) ménagée contre la fixation encliquetable (5) possède une surface biseautée (7).

5. Condensateur électrique selon l'une des revendications 1 à 4, caractérisé en ce que le tourillon de fixation (2) est pourvu d'une isolation (12).

6. Condensateur électrique selon la revendication 5, caractérisé en ce que l'isolation (12) est composée d'une gaine rétrécissable ou d'un capuchon isolant.
